**Europäisches Patentamt**

**European Patent Office**

**Office européen des brevets**

(11) Publication number: **0 089 239**
**B1**

## EUROPEAN PATENT SPECIFICATION

(45) Date of publication of patent specification: **25.01.89**

(51) Int. Cl.⁴: **G 02 B 26/02**

(21) Application number: **83301447.5**

(22) Date of filing: **16.03.83**

(54) Fiber wrap keyboard and switch.

(30) Priority: **16.03.82 US 358825**

(43) Date of publication of application:
**21.09.83 Bulletin 83/38**

(45) Publication of the grant of the patent:
**25.01.89 Bulletin 89/04**

(84) Designated Contracting States:
**BE DE FR GB NL SE**

(56) References cited:
DE-A-2 516 171
FR-A-2 238 115
US-A-3 648 050
US-A-3 856 127
US-A-4 013 342

(73) Proprietor: **UNISYS CORPORATION**
**1, Burroughs Place**
**Detroit Michigan 48232 (US)**

(72) Inventor: **Mosier, Carl E.**
**1553 Village Way**
**Orange Park Florida 32073 (US)**
Inventor: **Ely, Richard I.**
**2703 Woodland Drive**
**Orange Park Florida 32073 (US)**
Inventor: **Subbarao, Wunnava V.**
**10425 SW. 143rd Ct.**
**Miami Florida 33186 (US)**
Inventor: **Andree, James E.**
**East 12720 Kiowa Court Spokane**
**Spokane County Washington 99206 (US)**

(74) Representative: **Kirby, Harold Douglas Benson**
**et al**
**G.F. Redfern & Company Marlborough Lodge 14**
**Farncombe Road**
**Worthing West Sussex BN11 2BT (GB)**

# Description

Background of the Invention

1. Field of the Invention

The present invention relates to optical keyboards and key switches and more specifically, to photo-optical keyboards employing strands or fibres of material which are capable of transmitting light from a source to a receiver.

2. Description of the Prior Art

Fibre optic keyboards and key switch because of the manufacturing and alignment problems in handling the various components of these structures have proven to be much too costly and unreliable to find a ready place in the keyboard market. The fibers themselves are relatively costly to produce while the utilization of multiple strands of plural fibres involves a time consuming and expensive fabrication technique. Thus a so called true fibre optical keyboard is relatively uncommon in the keyboard market place.

US—A—3 856 127 disclosed a photo-optical keyboard comprising a plurality of rows of bundles of light-conducting fibres, a plurality of columns of bundles of light-conducting fibres extending substantially perpendicular to said rows, and a plurality of key assemblies, one located at each intersection of a row and a column, wherein a single fibre from each row is terminated at each of said key assemblies and a corresponding fibre from each column is also terminated at each of said key assemblies so that light introduced into any one of said row bundles can be transmitted to any selected one of said column bundles by operation of the appropriate key assembly so that a light-transmitting portion thereof is interposed between the ends of the two fibres terminated at that intersection. In the keyboard disclosed in US—A—3 856 127, at each of the intersections the terminated end portions of the two fibres are bent out of their respective bundles so that they are co-axial. Thus the two terminated ends face each other directly across the respective key assembly.

Summary of the Invention

In accordance with the present invention the arrangement is such that at each of said intersections the axis of the terminated end portion of the row fibre is substantially perpendicular to the axis of the column fibre, while the end surface of each fibre is inclined at such an angle to the axis of the fibre that a ray of light leaving one of the fibres is bent by refraction at the fibre-air interface in such a direction and at such an angle that it impinges on the end surface of the other fibre and is again bent by refraction at the air-fibre interface so that it travels along said other fibre.

The present invention provides a new, useful and unobvious photo-optical fibre keyboard for use wherever keyboards are useful and required, such for example as in data processing equipment, IO terminals, teletype, etc.

Glass, plastic or similar fibers of suitable optical transmissivity are employed in the present invention and are automatically wrapped into a matrix configuration i.e., $4 \times 4$, $5 \times 7$, $7 \times 9$, etc., to form the desired keyboard key layout in rows and columns. At each right angled bend point i.e. where the y column turns or curves to form the x row, the fibre is cut or sliced at an angle. Because of the difference in the refractive indices $N_2$ and $N_1$ of the fibre material and the air, respectively, with $N_2$ larger or greater than $N_1$, the light ray from the light generating source propagating along an x-row fibre bends on leaving the fibre, crosses the gap between the fibre ends and couples into the y-column fibre to direct the light onto the photoreceptor or photodetector.

By introducing a light obstructing or blocking member, e.g. a key structure having a light passing aperture therein, the light can be interrupted or coupled as the key is activated and a signal can thus be developed which can be utilized as an indication of the key actuation.

Brief Description of the Drawings

Figure 1 is a schematic plan view of a fibre wrap keyboard matrix incorporating the present invention;

Figure 2a and 2b are detailed views (not to scale) of a complete fiber and a fiber cut according to the teaching of the present invention, respectively;

Figure 3 is a schematic side elevation view of a key switch for the keyboard of the present invention illustrated in the inactive or light blocking position; and

Figure 4 is a view similar to Figure 3 but illustrating the key switch in the active or light coupling position.

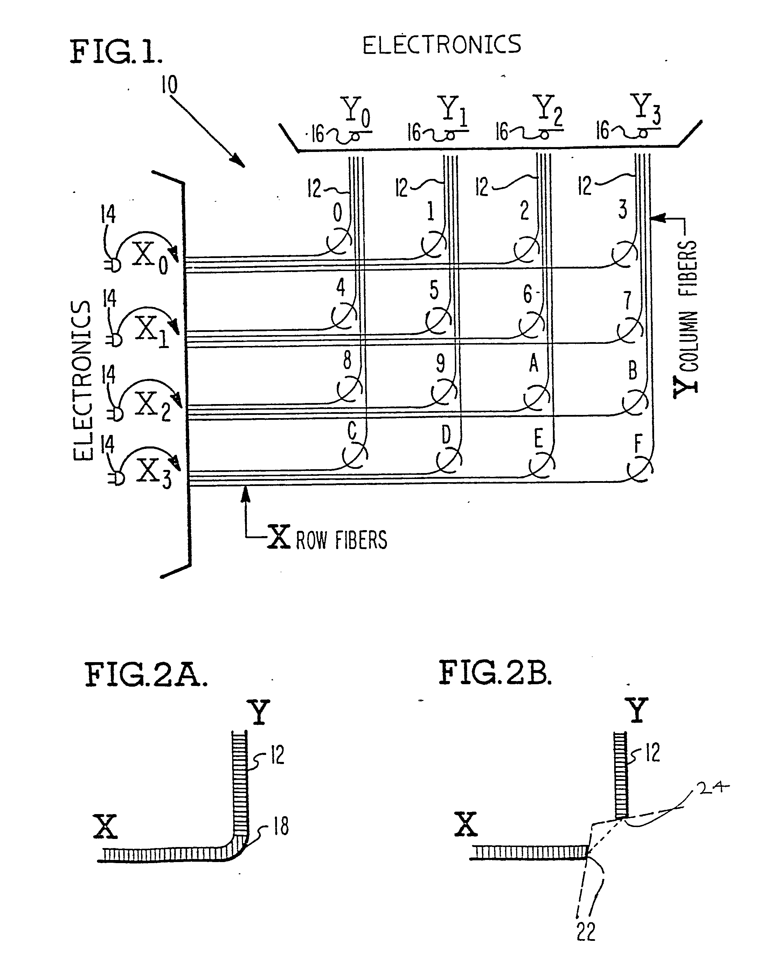

Brief Description of the Preferred Embodiment Illustrated in Figure 1 is a schematic view of a keyboard matrix array in accordance with the present invention. As shown, the matrix 10 comprises rows and columns of optical light conducting fibre elements 12 such for example as plastic threads or strands of generally circular or rectangular cross section.

Each thread or strand 12 is wrapped or laid down so as to have a y-column portion and an x-row portion. A light generating means 14 such for example as a light emitting diode (LED) is disposed at the row position of the strands 12, while a light receptor means 16, such for example, a photo transistor or a photo-diode is disposed at the column position of the strands 12.

Energization of the light generating means 14 caused light to be transmitted over the bundle of fibre strands 12 to the photoreceptor means 16.

As seen in Figure 2a each fibre is originally arranged in an L-shaped pattern (uncut) between the x and y position. By suitably slicing or cutting each fibre at a respective elbow or bend area 18 two facing angular cuts 22 and 24 are formed respectively, in the x portion and the y portion of each fibre strand or thread as shown in Figure 2b.

It is noted that while the refractive index of air is

$N_1$, the refractive index $N_2$ of the truncated fibre element 12 is substantially greater than $N_1$ so that the light that passes along the x portion will bend and will couple across the air into the y portion of the fibre.

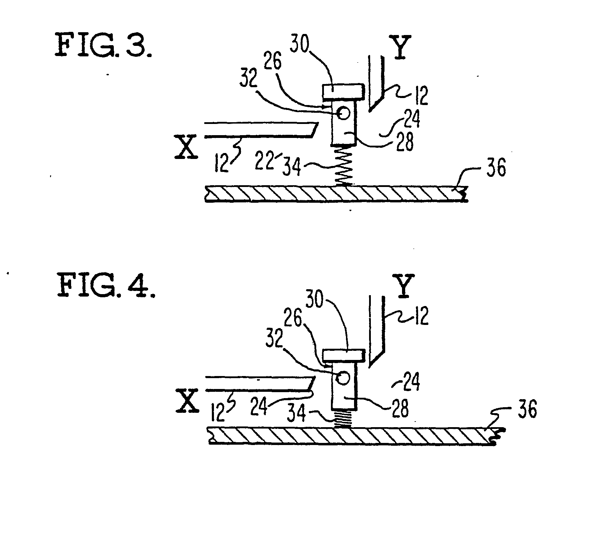

In order to provide an operational keyboard device a series of light blocking members 26 are employed, as shown in Figures 3 and 4 in which the member 26 is shown rotated though 90 degrees in order that the aperture 32 can be seen. Each member 26 includes a stem portion 28 and an identifying keytop 30. Stem portion 28 is provided with a transverse aperture 32 and means for retracting the key in response to key depression, as by the finger of an operator. The retracting means 34 may be a spring captivated within a cylindrical aperture in the lower portion of the stem 28. The spring abuts the base member 36 of the keyboard so as to provide a vertically movable key switch.

By inserting the key stem 28 with its aperture 32 between the two angled cuts in each x-y fibre, a light blocking and unblocking member is formed. As seen in Figure 3 with the key 26 raised to the inoperative position light cannot pass through the aperture 32 and thus no signal is provided with the respective y column receptor 16. However, depression of key 26, as shown in Figure 4 will bring the aperture 32 into coincidence or alignment with the two angled optical surfaces 22 and 24 and light will then be coupled from the LED 14 to the photo receptor 16 causing a signal output to be generated through the associated operational electronics.

In the $4 \times 4$ fibre optic keyboard matrix illustrated in Figure 1, each key is individualized for identification. Thus for example if $x_2$ row fibres are lighted and $y_1$ fibres pick up light this indicates that key mumber 9 is activated. If $x_3$ row fibres are lighted and $y_2$ picks up light then key e is activated. If $x_3$ is lighted and $y_1$ and $y_3$ pick up light then keys d and f are activated and so on for all the keys depressed throughout the matrix above described.

There has thus been described a new, novel, useful and heretofore unobvious photo-optical keyboard structure which is inexpensive to fabricate and simple and efficient in use and operation. The concept is completely feasible and can be produced by means of automatic machinery which include:

1. Automatically organizing and mounting bundles of optical fibres in a desired matrix to form a keyboard layout.

2. Automatically cutting or slicing the fibres at strategic predetermined locations to form air gaps across which the signal will be coupled as the key stem is raised or lowered, and

3. Automatically inserting light blocking and unblocking keys and locking them in position to form a keyboard key structure.

## Claim

A photo-optical keyboard comprising a plurality of rows (X) of bundles of light-conducting fibres (12), a plurality of columns (Y) of bundles of light-conducting fibres (12) extending substantially perpendicular to said rows, and a plurality of key assemblies (26), one located at each intersection of a row (X) and a column (Y), wherein a single fibre from each row is terminated at each of said key assemblies and a corresponding fibre from each column is also terminated at each of said key assemblies so that light introduced into any one of said row bundles can be transmitted to any selected one of said column bundles by operation of the appropriate key assembly so that a light-transmitting portion (32) thereof is interposed between the ends of the two fibres terminated at that intersection, characterised in that at each of said intersections the axis of the terminated end portion of the row fibre is substantially perpendicular to the axis of the column fibre, while the end surface of each fibre is inclined at such an angle to the axis of the fibre than a ray of light leaving one of the fibres is bent by refraction at the fibre-air interface in such a direction and at such an angle that it impinges on the end surface of the other fibre and is again bent by refraction at the air-fibre interface so that it travels along said other fibre.

## Patentanspruch

Optische Tastatur mit mehreren Zeilen (X) lichtleitender Faserbündel (12); mit mehreren Spalten (Y) lichtleitender Faserbündel (12), die etwa rechtwinklig zu den Zeilen verlaufen; mit mehreren Tasten (26), von denen jeweils eine an einem Kreuzungspunkt der Zeilen (X) und Spalten (Y) angeordnet ist; bei der eine einzelne Faser jeder Zeile an jeder Taste endet und eine entsprechende Faser jeder Spalte ebenfalls an jeder Taste endet, so daß das in jedes der Zeilenbündel eingeleitete Licht auf jedes der Spaltenbündel übertragen werden kann, wenn eine entsprechende Taste derart betätigt wird, daß ein lichtübertragendes Element (32) Taste zwischen die Enden der in dem entsprechenden Kreuzungspunkt endenden beiden Fasern gebracht wird, dadurch gekennzeichnet, daß in jedem der Kreuzungspunkte die Achse des Endbereiches der dort endenden Zeilenfaser etwa rechtwinklig zu der Achse der Spaltenfaser liegt, und die Endfläche jeder Faser um einen solchen Winkel gegenüber der Achse der Faser geneigt ist, daß ein eine der Fasern verlassender Lichtstrahl durch Refraktion an dem Faser/Luft-Übergang in eine solche Richtung und in einem solchen Winkel abgelenkt wird, daß er auf die Endfläche der anderen Faser auftrifft und durch Refraktion an dem Luft/Faser-Übergang erneut so abgelenkt wird, daß er entland der anderen Faser geleitet wird.

## Revendication

Clavier photo-optique comportant un ensemble de lignes (X) de faisceau de fibres conductrices de lumière (12), un ensemble de colonnes (Y) de faisceau de fibres conductrices de lumière (12) disposées sensiblement perpendiculairement aux lignes et un ensemble de touches (26), une touche étant placée à l'intersection de chaque fois une ligne (X) et d'une colonne (Y), une seule fibre d'une ligne se terminant au niveau de chaque touche et une fibre correspondante de chaque colonne se terminant également au niveau de chaque touche de manière que la lumière introduite dans n'importe quelle fibre de ligne puisse être transmise vers n'importe quelle fibre de colonne, choisie par la commande de la touche correspondante pour qu'une partie (32) transparente à la lumière se place entre l'extrémité des deux fibres se terminant à son intersection, clavier caractérisé en ce qu'à chacune des intersections, l'axe de la partie d'extrémité de la fibre de. ligne est pratiquement perpendiculaire à l'axe de la fibre de la colonne alors que la surface d'extrémité de cette fibre est inclinée suivant un angle tel par rapport à l'axe de la fibre pour que le rayon lumineux sortant de l'une des fibres soit dévié par réfraction à l'interface fibre/air dans un direction et suivant un angle tels que la lumière tombe sur la surface d'extrémité de l'autre fibre et soit de nouveau dévié par réfraction à l'interface air/fibre pour passer dans une autre fibre.

# FIG.1.

ELECTRONICS

# FIG.2A.

# FIG.2B.

FIG.3.

FIG.4.